# EUROPÄISCHE PATENTANMELDUNG

(11) **EP 1 733 604 A1**
(43) Veröffentlichungstag der Anmeldung: **20.12.2006**
(21) Anmeldenummer: 06011891.6
(22) Anmeldetag: 09.06.2006
(51) Int. Cl.: A01C 7/20

(54) **Verteilmaschine**

(30) Priorität: 17.06.2005 DE 102005028028
(71) Anmelder: Amazonen-Werke H. Dreyer GmbH & Co. KG, 49205 Hasbergen (DE)
(72) Erfinder: Thielicke, Renè, 04420 Markranstädt (DE); Brook, Gebhard, 49429 Visbek (DE); Steen, Rüdiger, 27798 Hude (DE)

(57) **Zusammenfassung**

Verteilmaschine, insbesondere Sämaschine (1), mit einem lang gestrecken Vorratsbehälter (5), in dessen unteren Bereich Auslassöffnungen (8) mit Dosierelementen (9) angeordnet sind, wobei unter den Dosierelementen das von den Dosierelementen dosierte Material in Richtung des Bodens leitende Leitorgane (13,14) angeordnet sind, wobei der lang gestreckte Vorratsbehälter zwei trichterförmig zueinander angeordnete lang gestreckte Wände (6,7) aufweist. Um die Anordnung des Elementes zur Aufnahme der Leitorgane zu vereinfachen und erheblich preiswerter zu gestalten, ist vorgesehen, dass einer dieser lang gestreckten Wände (7) auf seiner Unterseite (10) einen zumindest annähernd waagerecht abgekanteten Abschnitt (11) aufweist, dass in diesem abgekanteten Bereich eine der Anzahl der Dosierelemente zumindest entsprechende Anzahl Aussparungen (12) zur Anordnung der Leitorgane angeordnet sind.

## Beschreibung

Die Erfindung betrifft eine Verteilmaschine gemäß des Oberbegriffes des Patentanspruches 1.

Derartige Verteilmaschinen sind in der Praxis bekannt und werden auch als mechanische Sämaschinen bezeichnet. Sie weisen einen lang gestreckten Vorratsbehälter auf. In diesem Vorratsbehälter sind im Bereich der Auslassöffnungen Dosierelemente zugeordnet. Unterhalb der Dosierelemente ist eine in den meisten Fällen wegnehmbare Schiene mit Durchbrüchen angeordnet, in welcher die zu den Ausbringorganen führenden Leitorgane angeordnet sind. Die als separates Teil ausgebildete Schiene zur Aufnahme der Leitorgane ist relativ aufwendig.

Der Erfindung liegt die Aufgabe zugrunde, die Anordnung und Ausgestaltung des Elementes zur Aufnahme der Leitorgane zu vereinfachen und erheblich preiswerter zu gestalten.

Diese Aufgabe wird erfindungsgemäß dadurch gelöst, dass einer der lang gestreckten Wände auf ihrer Unterseite einen zumindest annähernd waagerecht abgekanteten Abschnitt aufweist, dass in diesem abgekanteten Bereich eine der Anzahl der Dosierelemente zumindest entsprechende Anzahl Aussparungen zur Anordnung der Leitorgane angeordnet sind. Infolge dieser Maßnahmen wird die Schiene, in welcher die Aussparungen zur Anordnung der Leitorgane angeordnet sind, durch einfaches Abkanten des unteren Bereiches des Vorratsbehälters geschaffen und ist so unmittelbar an den Vorratsbehälter angeordnet.

Um die Leitorgane über die gesamte Breite des Vorratsbehälters anordnen zu können, ist vorgesehen, dass der abgekantete Abschnitt sich zumindest annähernd über die Länge der lang gestreckten Vorratsbehälterwand erstreckt.

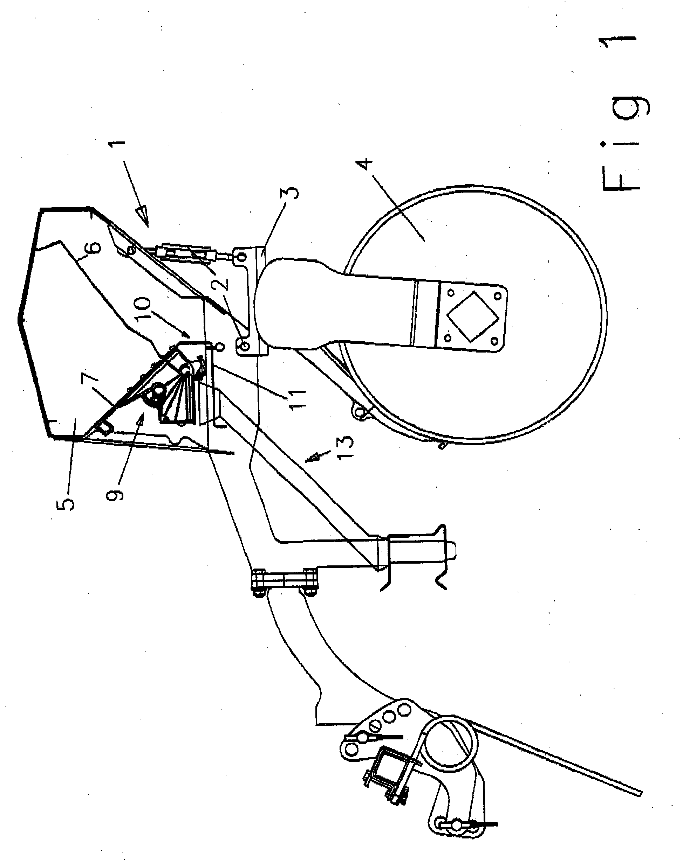

Weitere Einzelheiten der Erfindung sind der Beispielsbeschreibung und den Zeichnungen zu entnehmen. Hierbei zeigen
- Fig. 1: die Sämaschine in Seitenansicht,

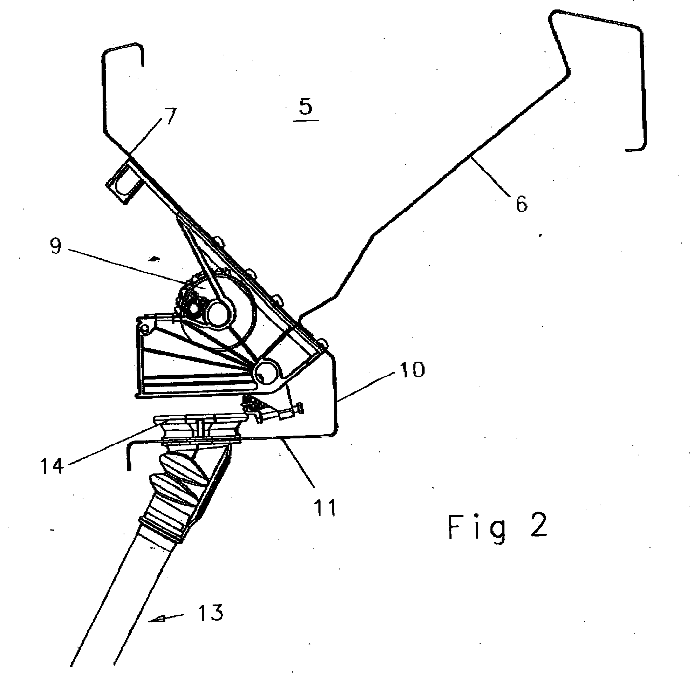

- Fig. 2: einen Schnitt durch den Vorratsbehälter der Sämaschine in vergrößertem Maßstab und

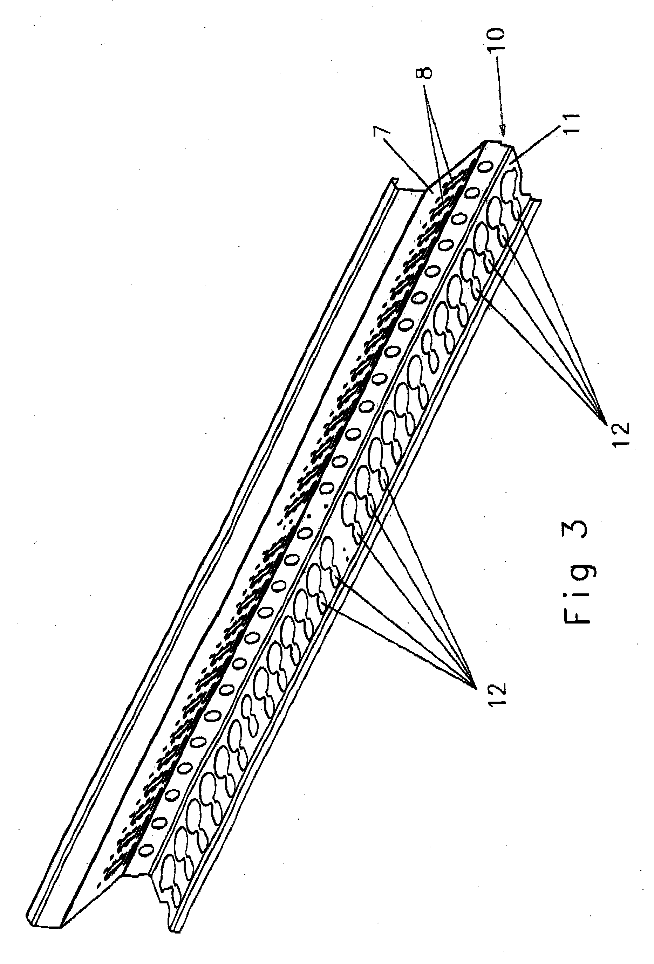

- Fig. 3: die Rückwand des Vorratsbehälters mit dem abgekanteten Bereich in perspektivischer Darstellung.

Die als Sämaschine 1 ausgebildete Verteilmaschine ist mittels Kupplungselementen 2 auf dem Rahmen 3 einer Bodenwalze 4 angeordnet. Die Sämaschine 1 weist einen lang gestreckten Vorratsbehälter 5 auf. Der Vorratsbehälter 5 weist eine vordere 6 und eine hintere Wand 7 auf, die trichterförmig zueinander angeordnet sind. Im unteren Bereich der hinteren Trichterwand 7 sind Auslassöffnungen 8 angeordnet, vor denen Dosierelemente 9 angeordnet sind. Die hintere Trichterwand 7 weist an ihrem unteren Ende 10 einen zur Rückseite zumindest annähernd waagerecht abgekanteten Abschnitt 11 auf. Dieser Abschnitt 11 befindet sich unterhalb der Dosierorgane 9. In dem waagerecht abgekanteten Abschnitt 11 ist eine der Anzahl der Dosierorgane 9 zumindest entsprechende Anzahl Aussparungen 12 angeordnet. Diese Aussparungen 12 dienen zur Anordnung der Leitorgane, 13 die als Leitungen ausgebildet sind, um dass von den Dosierelementen 9 dosierte Material in Richtung des Bodens zu leiten.

Der abgekantete Abschnitt 11 weist zumindest annähernd die Länge der lang gestreckten Vorratsbehälterwand 7 auf, so dass er sich zumindest annähernd über die Länge der lang gestreckten Vorratsbehälterwand 7 erstreckt.

In den Aussparungen 12, die sich in dem abgekanteten Bereich 11 befinden, sind die den Leitungen 13 zugeordneten Einlauftrichter 14 angeordnet.

## Patentansprüche

1. Verteilmaschine, insbesondere Sämaschine, mit einem langgestrecken Vorratsbehälter, in dessen unteren Bereich Auslassöffnungen mit Dosierelementen angeordnet sind, wobei unter den Dosierelementen das von den Dosierelementen dosierte Material in Richtung des Bodens leitende Leitorgane angeordnet sind, wobei der lang gestreckte Vorratsbehälter zwei trichterförmig zueinander angeordnete lang gestreckte Wände aufweist, **dadurch gekennzeichnet, dass** eine der lang gestreckten Wände (7) auf ihrer Unterseite (10) einen zumindest annähernd waagerecht abgekanteten Abschnitt (11) aufweist, dass in diesem abgekanteten Bereich (11) eine der Anzahl der Dosierelemente (9) zumindest entsprechende Anzahl Aussparungen (12) zur Anordnung der Leitorgane (13,14) angeordnet sind.

2. Verteilmaschine nach Anspruch 1, **dadurch gekennzeichnet, dass** der abgekantete Abschnitt (11) sich zumindest annähernd über die Länge der lang gestreckten Vorratsbehälterwand erstreckt.

3. Verteilmaschine nach einem oder mehreren der vorstehenden Ansprüche, **dadurch gekennzeichnet, dass** die Leitorgane als Leitungen (13) ausgebildet sind.
